# FASCICULE DE BREVET EUROPEEN

(11) **EP 1 014 463 B1**
(45) Date de publication et mention de la délivrance du brevet: **05.01.2005**
(21) Numéro de dépôt: 99402841.3
(22) Date de dépôt: 17.11.1999
(51) Int. Cl.: H01M 4/74, H01M 4/80

(54) **Generateur electrochimique dans lequel une electrode a un bord renforce par un feuillard**
Elektrochemischer Generator mit einer durch ein Band randverstärkten Elektrode
Electrochemical generator with an electrode whose rim is reinforced by a tape

(30) Priorité: 24.12.1998 FR 9816428
(43) Date de publication de la demande: 28.06.2000
(73) Titulaire: ALCATEL, 75008 Paris (FR)
(72) Inventeur: Mas, Jean-François, 33700 Merignac (FR); Godard, Catherine, 33300 Bordeaux (FR)
(74) Mandataire: Pochart, François

(56) Documents cités:
- FR-A- 2 705 834

## Description

La présente invention concerne un générateur électrochimique comprenant au moins une électrode dont l'un des bord a été renforcé par un feuillard rapporté.

Un générateur électrochimique comprend un faisceau électrochimique composé d'au moins une électrode positive et au moins une électrode négative placée face à face de part et d'autre d'un séparateur isolant électrique. Le séparateur est généralement une membrane ou un feutre en matériau polymère qu'on imprègne d'électrolyte.

Lors de l'assemblage du générateur électrochimique, l'électrode de chaque polarité doit être reliée électriquement respectivement à la borne de sortie de courant correspondante. Cette liaison s'effectue le plus souvent par l'intermédiaire d'une connexion fixée d'une part sur la partie interne de la borne et d'autre part sur le support conducteur de l'électrode. La connexion se présente généralement sous la forme d'une bande métallique mince qui est éventuellement découpée pour lui conférer le contour souhaité.

Pour que la fixation de la connexion soit suffisamment fiable, on renforce le bord de l'électrode au moins dans la zone de fixation, mais de manière plus sûre sur toute sa longueur. La connexion peut être soudée sur le renfort ou bien faire corps avec lui comme décrit dans le brevet français FR-2 705 834.

Le renfort de l'électrode est avantageusement un ruban métallique mince qui est appliqué parallèlement au bord de l'électrode sur une face ou sur les deux faces. Il est maintenu en place par une soudure.

A l'extrémité du ruban, il subsiste toujours une faible distance entre le bord du ruban et la dernière soudure. Ceci autorise l'un des angles droits situés à l'extrémité du ruban à se recourber sous l'effet d'un choc mécanique lors des manipulations, par exemple par frottement sur le plan de travail, lors de l'empilage des électrodes ou bien de l'assemblage du faisceau. Le séparateur possédant une faible tenue mécanique est facilement déchiré par cette aspérité et un court-circuit est inévitable.

La présente invention a pour but de proposer un générateur électrochimique dans lequel le risque de court-circuit dans les conditions qui viennent d'être décrites est minimisé.

L'objet de la présente invention est un générateur électrochimique comprenant au moins deux électrodes de polarité différente placées face à face de part et d'autre d'un séparateur, un feuillard métallique étant fixé le long du bord de la première desdites électrodes et s'étendant au moins jusqu'à l'une des extrémités dudit bord, caractérisé en ce que, sur la deuxième desdites électrodes, la partie située en vis à vis dudit feuillard au droit de ladite extrémité est partiellement évidée.

Cet évidemment concerne la partie du feuillard de la deuxième électrode dont l'angle est en vis-à-vis de l'angle de la première électrode à l'origine des courts-circuits. Pour des raisons de fiabilité, l'évidemment déborde en partie sur la partie de l'électrode revêtue de matière active.

Selon un mode de réalisation préféré, ledit évidemment comprend un premier côté et un deuxième côté se rejoignant par un arrondi, lesdits côté rejoignant par un arrondi respectivement le bord supérieur dudit feuillard et le bord latéral de ladite deuxième électrode.

Ledit premier côté dudit évidemment est un segment de droite qui fait un angle supérieur à 90° à son intersection avec le bord inférieur dudit feuillard. Ainsi on évite de recréer au niveau de l'intersection un angle aigu plus vulnérable aux chocs mécaniques.

Ledit deuxième côté dudit évidemment fait un angle supérieur à 90° à son intersection avec le bord latéral de ladite deuxième électrode, pour la même raison que précédemment.

Avantageusement l'évidemment de l'une des extrémités dudit feuillard est de dimensions différentes de l'évidemment de l'autres desdites extrémités. Cette légère dissymétrie tient compte du sens de déplacement de l'outil de découpe des têtes de plaques dans le feuillard métallique. Ainsi on facilite la découpe et on supprime les pertes de matière sur la longueur de la bande d'électrodes.

On peut appliquer un seul feuillard, par exemple de 0,2mm d'épaisseur, contre l'une des faces de l'électrode. On peut aussi disposer deux feuillards de part et d'autre de l'électrode, par exemple chacun de 0,1mm d'épaisseur, ceux-ci pouvant être constitués du même feuillard plié en deux et placé à cheval sur le bord de l'électrode.

Le feuillard est de préférence soudé sur ladite première électrode par points, à la molette ou par ultrasons. La soudure permet de rendre fiable la continuité électrique entre le collecteur de courant de l'électrode et le feuillard.

Les électrodes peuvent être de type fritté ou non-fritté. Une électrode de type non-fritté comprend un support conducteur et une pâte contenant la matière électrochimiquement active et un liant.

Le support de l'électrode peut être un support bidimensionnel comme un feuillard plein ou perforé, un métal déployé, une grille ou un tissu, ou bien un support tridimensionnel comme une mousse ou un feutre.

La présente invention s'applique aux générateurs électrochimiques à électrolyte alcalin, comme les générateurs au nickel, ou à électrolyte organique, comme les générateurs au lithium. Les électrodes peuvent être planes ou spiralées.

L'invention sera mieux comprise et d'autres avantages et particularités apparaîtront à la lecture de la description qui va suivre, donnée à titre non limitatif, accompagnée du dessin annexé dans lequel :
- la figure 1 est une vue partielle d'une électrode positive d'un générateur selon la présente invention,
- la figure 2 est une vue partielle d'un premier mode de réalisation d'une électrode négative d'un générateur selon la présente invention,
- la figure 3, analogue à la figure 2, est une vue partielle d'un deuxième mode de réalisation de l'électrode négative selon l'invention,
- la figure 4 montre un faisceau électrochimique comprenant une électrode positive et une électrode négative encadrant un séparateur (non visible sur la figure).

Il doit être bien entendu, toutefois, que ce dessin et les parties descriptives correspondantes, sont donnés uniquement à titre d'illustration de l'objet de l'invention, dont ils ne constituent en aucune manière une limitation. En particulier les divers modes de réalisation décrits et représentés et les diverses applications numériques fournies ne le sont qu'à titre d'exemples non limitatifs.

Le générateur électrochimique selon l'invention comprend un faisceau d'électrodes composé d'au moins une électrode positive et d'au moins une électrode négative encadrant un séparateur. On décrit à titre d'exemple un générateur nickel-cadmium à électrolyte alcalin dont les électrodes sont planes.

L'électrode positive 1 se présente sous la forme d'une plaque plane et sensiblement rectangulaire dont les dimensions sont environ : hauteur 143mm, largeur 98mm et épaisseur 0,9mm. L'électrode 1 est constituée d'un support en mousse de nickel dans lequel est introduite une pâte contenant la matière électrochimiquement active, ici un hydroxyde de nickel.

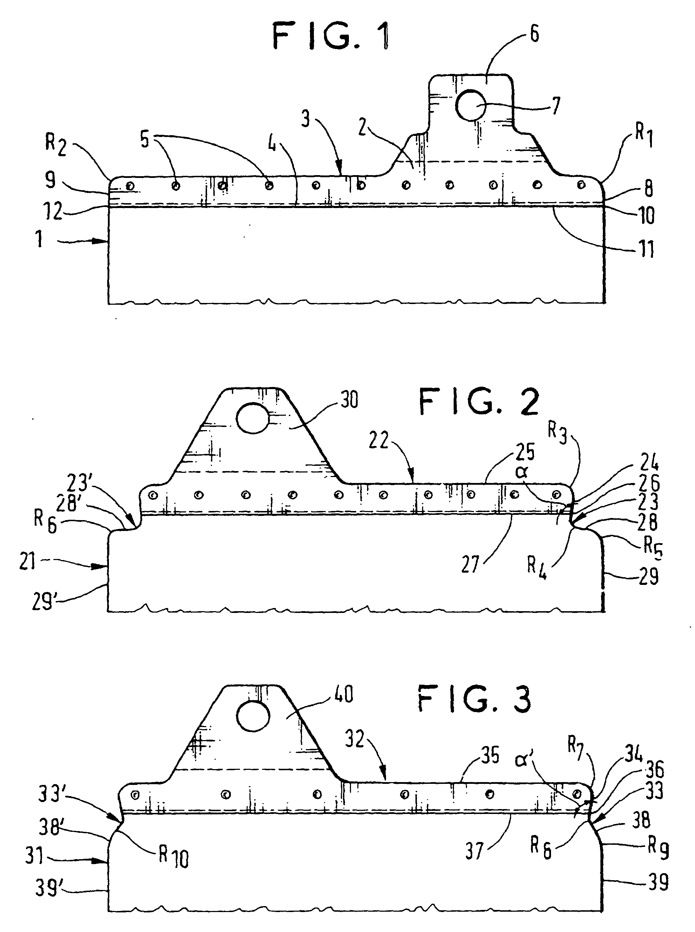

Le long du bord supérieur de l'électrode 1, une bande 2 d'environ 5mm n'est pas revêtue de matière active. Comme le montre la figure 1, on dispose un large ruban 3 en feuillard d'acier nickelé de manière à recouvrir cette bande 2 et à chevaucher légèrement la partie 4 revêtue de matière active. Le ruban 3 est maintenu le long du bord de l'électrode 1 par des points de soudure 5 régulièrement espacés.

Le ruban 3 est alors découpé en forme de tête de plaque 6 pour le raccordement électrique de l'électrode 1 à la borne de sortie de courant du générateur. Une compression ou un laminage après découpe permet de réduire la surépaisseur crée par le ruban 3 dans la zone de chevauchement. Le raccordement entre cette tête de plaque 6 et la borne est assurée par exemple par boulonnage à travers une perforation 7 de la tête de plaque 6 ou par soudage, notamment par résistance, par ultrasons ou par laser.

L'extrémité du ruban 3 coïncide avec l'extrémité latérale de l'électrode 1. Après découpe, la partie supérieure du ruban 3 est arrondie selon un rayon R₁ = 4mm à l'extrémité 8 la plus proche de la tête de plaque 6 et un rayon R₂ = 2mm à l'extrémité opposée 9. L'angle 10 entre la partie inférieure 11 du ruban 3 et son extrémité 8 recouvre la matière active. Lors de la manipulation de l'électrode (empilage, frottements, etc..), cet angle 10 a tendance à se soulever sous l'effet d'une sollicitation mécanique. Se redressant il risque de percer le séparateur et d'établir un court-circuit avec l'électrode négative contiguë. De manière symétrique, l'angle 12 à l'extrémité opposée 9 peut se soulever également.

Selon une première variante de l'invention, l'électrode négative 21 se présente sous la forme d'une plaque plane et sensiblement rectangulaire dont la largeur est du même ordre que celle de l'électrode positive 1. Dans le cas présent l'électrode est constituée d'un support, qui est un feuillard perforé nickelé, sur lequel est enduit une pâte contenant de l'hydroxyde de cadmium.

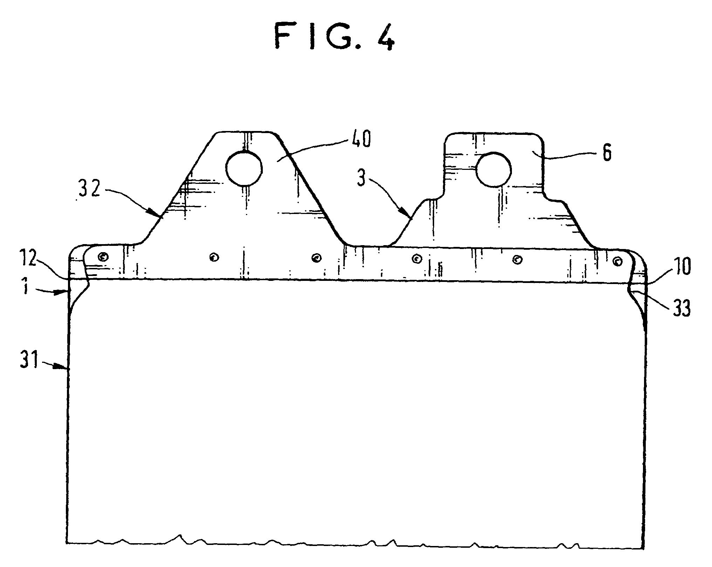

Comme le montre la figure 2, de manière analogue à l'électrode positive 1, on fixe le long du bord supérieur de l'électrode négative 21 dépourvu de matière active un ruban 22 de feuillard métallique. Afin d'éviter que l'angle 10 du ruban 3 de l'électrode positive 1 vienne en contact avec la partie du ruban 22 placé en vis-à-vis, on réalise un évidemment 23 dans cette partie du ruban 22 située à l'extrémité du bord de l'électrode négative 21.

Le côté 24 de cet évidemment 23 rejoint le bord supérieur 25 du ruban 22 par un arrondi de rayon R₃ = 3mm. Le côté 24 est un segment de droite d'environ 2mm de longueur. Au niveau de son intersection 26 avec la partie inférieure 27 du ruban 22, le segment 24 fait un angle α de 100° avec la partie 27. Le fond de l'évidemment 23 a sensiblement la forme d'un demi-cercle de rayon R₄ = 2mm.

L'autre coté 28 de cet évidemment 23 rejoint le bord latéral 29 de l'électrode 21 par un arrondi de rayon R₅ = 4mm.

A l'autre extrémité du ruban 22 se trouve un évidemment 23' analogue à l'évidemment 23, à l'exception du fait que le coté 28' rejoint le bord latéral 29' de l'électrode 21 par un arrondi de rayon R₆ = 2mm. Cette dissymétrie est introduite pour tenir compte du sens de déplacement de l'outil de découpe de la tête de la plaque 26 par rapport à l'électrode 21.

Selon une deuxième variante de l'invention, l'électrode négative 31 se présente sous la forme d'une plaque plane et sensiblement rectangulaire dont la largeur est du même ordre que celle de l'électrode positive 1. Dans le cas présent l'électrode est constituée d'un support, qui est un feuillard perforé nickelé, sur lequel est enduit une pâte contenant un alliage métallique hydrurable.

Comme le montre la figure 3, de manière analogue à l'électrode positive 1, on fixe le long du bord supérieur dépourvu de matière active un ruban 32 de feuillard métallique. Afin d'éviter que l'angle 10 de l'électrode positive 1 vienne en contact avec la partie du ruban 32 placé en vis-à-vis, on réalise un évidemment 33 dans cette partie du ruban 32 située à l'extrémité du bord de l'électrode négative 31.

Le côté 34 de cet évidemment 33 rejoint le bord supérieur 35 de l'électrode 31 par un arrondi de rayon R₇ = 3mm. le côté 34 est un segment de droite d'environ 2mm de longueur. Au niveau de son intersection 36 avec la partie inférieure 37 du ruban 32, le segment 34 fait un angle α' de 100°. Le fond de l'évidemment 33 a sensiblement la forme d'un demi-cercle de rayon R₈ = 2mm.

L'autre coté 38 de cet évidemment 33 rejoint le bord latéral 39 de l'électrode 31 par un arrondi de rayon R₉ = 10mm.

A l'autre extrémité du ruban 32 se trouve un évidemment 33' analogue à l'évidemment 33, à l'exception du fait que le coté 38' rejoint le bord latéral 39' de l'électrode 31 par un arrondi de rayon R₁₀ = 8mm.

Cette variante présente l'avantage que l'électrode négative 31 est mieux protégée contre les chocs en cours de manipulation.

Sur la figure 4, les électrodes positive 1 et négative 31 sont disposées face à face de telle sorte que les têtes de plaques 6 et 36 de polarité opposée soit décalée l'une par rapport à l'autre. L'angle 10 du ruban 3 de l'électrode positive 1 se trouve face à l'évidemment 33 de l'électrode négative 31. Si des manipulations mal contrôlées amène l'angle 10 à se soulever, il ne peut se produire de court-circuit malgré la déchirure du séparateur car, grâce à l'évidemment 33, l'angle 10 ne peut plus entrer en contact avec l'électrode négative 31 selon l'invention.

On assemble des générateurs de type A comprenant au moins un couple d'électrodes positive 1 et négative selon l'art antérieur, des générateur de type B comprenant au moins un couple d'électrodes positive 1 et négative 21 selon l'invention, et des générateurs de type C comprenant au moins un couple d'électrodes positive 1 et négative 31 selon l'invention.

Au cours de la formation électrique des générateurs A, B et C, on relève le nombre de court-circuit qui se produisent. Les résultats figurent dans le tableau ci-dessous. Le taux de court-circuit est défini par le nombre de court-circuit observés pour 1 000 000 éléments.

**TABLEAU**

| Type de générateur | Taux de court-circuit |
|---|---|
| A | 50 |
| B | 4 |
| C | 0 |

## Revendications

1. Générateur électrochimique comprenant au moins deux électrodes de polarité différente placées face à face de part et d'autre d'un séparateur, un feuillard métallique étant fixé le long du bord supérieur de la première desdites électrodes et s'étendant au moins jusqu'à l'une des extrémités dudit bord,
**caractérisé en ce que**, sur la deuxième desdites électrodes, la partie située en vis à vis dudit feuillard au droit de ladite extrémité est partiellement évidée.

2. Générateur selon la revendication 1, dans lequel ledit évidemment comprend un premier côté et un deuxième côté se rejoignant par un arrondi, lesdits côté rejoignant par un arrondi respectivement le bord supérieur dudit feuillard et le bord latéral de ladite deuxième électrode.

3. Générateur selon l'une des revendications 1 et 2, dans lequel ledit premier côté dudit évidemment est un segment de droite qui fait un angle supérieur à 90° à son intersection avec le bord inférieur dudit feuillard.

4. Générateur selon l'une des revendications précédentes, dans lequel l'évidemment de l'une des extrémités dudit feuillard est de dimensions différentes de l'évidemment de l'autres desdites extrémités.

5. Générateur selon l'une des revendications précédentes, dans lequel ledit feuillard est soudé sur ladite première électrode par points, à la molette ou par ultrasons.

## Patentansprüche

1. Elektrochemischer Generator, umfassend mindestens zwei Elektroden unterschiedlicher Polarität, welche einander zugewandt auf gegenüberliegenden Seiten eines Separators angeordnet sind, wobei ein Metallstreifen entlang einer oberen Kante der ersten der Elektroden befestigt ist und sich zumindest bis zu einem der Enden der Kante erstreckt, **dadurch gekennzeichnet, dass** auf der zweiten der Elektroden der Teil, welcher an der Stelle dieses Endes dem Streifen gegenüberliegt, teilweise ausgespart ist.

2. Generator nach Anspruch 1, wobei die Aussparung eine erste Seite und eine zweite Seite umfasst, welche über eine Rundung zusammenlaufen, wobei die Seiten jeweils über eine Rundung mit der oberen Kante des Streifens und der seitlichen Kante der zweiten Elektrode zusammenlaufen.

3. Generator nach einem der Ansprüche 1 und 2, wobei die erste Seite der Aussparung ein geradliniges Segment ist, welches eine untere Kante des Streifens mit einem Winkel größer 90° schneidet.

4. Generator nach einem der vorhergehenden Ansprüche, wobei die Aussparung der einen der Enden des Streifens unterschiedliche Aussparungsabmessungen zu denen anderer Enden besitzt.

5. Generator nach einem der vorhergehenden Ansprüche, wobei das Band mittels Punkten, gerändelt oder mittels Ultraschall auf die erste Elektrode geschweißt ist.

## Claims

1. A storage cell comprising at least two electrodes of different polarity facing each other at each side of a separator, a metal foil being fastened along the top edge of the first of said electrodes and extending at least up to one of the ends of said edge,
**characterized in that**, on the second of said electrodes, the portion located opposite said foil in line with said end is partially recessed.

2. The cell according to claim 1, in which said recess comprises a first side and a second side connected by a rounded portion, said sides respectively joining the top edge of the foil and the side edge of said second electrode via a rounded portion.

3. The cell according to one of Claims 1 and 2, in which said first side of said recess is a segment of a straight line making an angle of greater than 90° at its intersection with the top edge of the foil.

4. The cell according to one of the preceding claims, in which the recess of one of the ends of the foil is of dimensions different from those of the recess on the other of said ends.

5. The cell according to one of the preceding claims, in which said foil is spot welded, seam welded or ultrasound welded onto said first electrode.
